# FASCICULE DE BREVET EUROPEEN

(11) **EP 0 855 776 B1**
(45) Date de publication et mention de la délivrance du brevet: **03.08.2005**
(21) Numéro de dépôt: 97403193.2
(22) Date de dépôt: 30.12.1997
(51) Int. Cl.: H02G 3/36, F16B 2/10

(54) **Pièce de fixation pour canalisation électrique**
Befestigungsvorrichtung für einen elektrischen Rohrleiter
A fixing device for electrical conduit

(30) Priorité: 10.01.1997 FR 9700365
(43) Date de publication de la demande: 29.07.1998
(73) Titulaire: Schneider Electric Industries SAS, 92500 Rueil-Malmaison (FR)
(72) Inventeur: Lefevre, René, 21800 Chevigny-Saint-Sauveur (FR); Milliere, Paul, 01490 Varois Et Chaignot (FR)

(56) Documents cités:
- EP-A- 0 579 929
- WO-A-89/12340
- GB-A- 2 270 344

## Description

La présente invention concerne une pièce de fixation, notamment de fixation murale, pour canalisation électrique profilée comportant une âme, une tête et un pied destinés respectivement à s'appliquer par des formes adaptées contre une paroi latérale et les parois supérieure et inférieure de la canalisation.

La tête et le pied d'une telle pièce connue de fixation pour canalisation électrique à section rectangulaire consistent en deux ailes supérieure et inférieure s'étendant perpendiculairement à l'âme et dont la longueur est adaptée à la largeur de la canalisation de manière que la pièce de fixation puisse envelopper la canalisation. La retenue de la pièce de fixation en position de maintien sur la canalisation est réalisée par une barrette de liaison qui s'étend le long d'une paroi latérale opposée à celle contre laquelle s'applique l'âme et qui est fixée par vissage aux extrémités libres des deux ailes.

Le montage d'une telle pièce de fixation autour de la canalisation n'est cependant pas rapide en raison de l'assemblage nécessaire de la barrette de liaison.

Par ailleurs, l'utilisation d'une telle barrette de liaison pour chaque pièce de fixation ne laisse pas libre accès à l'ensemble de la paroi latérale de la canalisation située du côté des barrettes de liaison, ce qui empêche de positionner des coffrets de dérivation à la canalisation au droit des pièces de fixation.

La présente invention a donc pour but un montage facile et rapide d'une pièce de fixation, notamment de fixation murale, pour canalisation électrique, la pièce de fixation laissant dégagée la paroi latérale de la canalisation opposée à sa paroi latérale de fixation et étant retenue solidement en position de maintien sur la canalisation.

La pièce de fixation **comporte une** tête **dotée d'**une partie fixe et **d'**une pièce montée pivotante sur la partie fixe selon un axe orienté selon la longueur de la canalisation et destinée à s'accrocher à la paroi supérieure de la canalisation. Selon l'invention, la pièce de **fixation est caractérisée par le fait** que la tête comporte des moyens de verrouillage élastique exerçant un effort parallèle à l'axe de pivotement pour verrouiller la pièce pivotante sur la partie fixe. Les moyens de verrouillage comportent un ressort et un verrou qui est sollicité par le ressort et mis en oeuvre automatiquement par le pivotement de la tête quand la pièce de fixation est appliquée contre la canalisation.

Selon une caractéristique, la pièce pivotante comprend dans une paroi latérale un évidement oblong dissymétrique présentant une partie large et une partie étroite telles que le verrou est engagée par le ressort dans la partie large en position de verrouillage mais pas dans la partie étroite en position de déverrouillage.

D'autres caractéristiques et avantages de l'invention ressortiront de la description faite ci-après en regard des dessins annexés.

Aux dessins annexés:
- la figure 1 est une vue en élévation d'une pièce de fixation selon l'invention retenue en position de maintien sur une canalisation électrique;
- la figure 2 est une vue en perspective de la pièce de fixation;
- la figure 3 est une vue en coupe et de dessus de la pièce de fixation en position déverrouillée;
- la figure 4 illustre la figure 3 dans la position de verrouillage de la pièce de fixation;
- la figure 5 est une vue en élévation de la pièce de fixation et de la canalisation en cours de montage;
- la figure 6 est une vue en élévation de la pièce de fixation une fois montée après la canalisation.

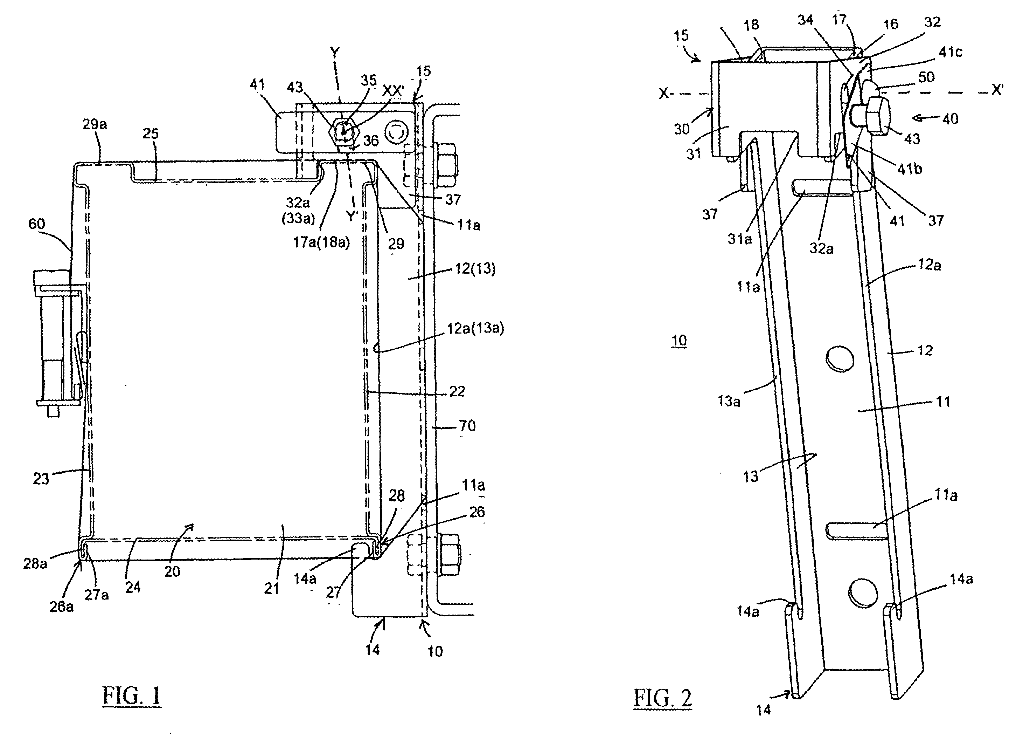

La pièce de fixation 10, illustrée aux figures 1 et 2, est associable à une canalisation électrique préfabriquée 20 pour réaliser la fixation de celle-ci à une paroi 70.

La canalisation électrique 20 est constituée d'une enveloppe métallique 21 de section rectangulaire ou carrée à quatre parois latérales 22, 23, inférieure 24 et supérieure 25.

La canalisation 20 est de préférence réalisée par pliage et par coopération de deux flans de tôle de manière à obtenir un contour fermé, le premier flan constituant les parois latérales et la paroi supérieure de l'enveloppe et le second flan constituant la paroi inférieure. Le pliage s'effectue à cet effet avec agrafage longitudinal en 26 et 26a par imbrication des bords libres 27, 28 et respectivement 27a, 28a des flans.

La paroi supérieure 25 présente sur chacun de ses bords longitudinaux un épaulement longitudinal 29, respectivement 29a, pour renforcer la rigidité de la canalisation.

La pièce de fixation 10 est conçue de manière à épouser les formes spécifiques des bords de la canalisation.

La pièce de fixation 10 présente une forme profilée en C et comprend une âme 11, deux flancs latéraux 12 et 13 disposés longitudinalement sur les bords de l'âme, un pied 14 ménagé dans la partie inférieure de la pièce et une tête 15 prévue dans sa partie supérieure.

La pièce 10 est destinée à être fixée sur la canalisation 20, les flancs 12 et 13 pouvant être appliqués par leurs tranches 12a et 13a contre la paroi latérale 22 de la canalisation, le pied 14 et la tête 15 pouvant s'agripper respectivement après les parois inférieure 24 et supérieure 25.

Le pied 14 comprend des crochets 14a prévus dans le prolongement des tranches 12a et 13a des flancs pour coopérer avec un pli de l'enveloppe, en particulier le bandeau d'agrafage 26.

La tête 15 comporte une partie fixe 16 et une pièce pivotante 30.

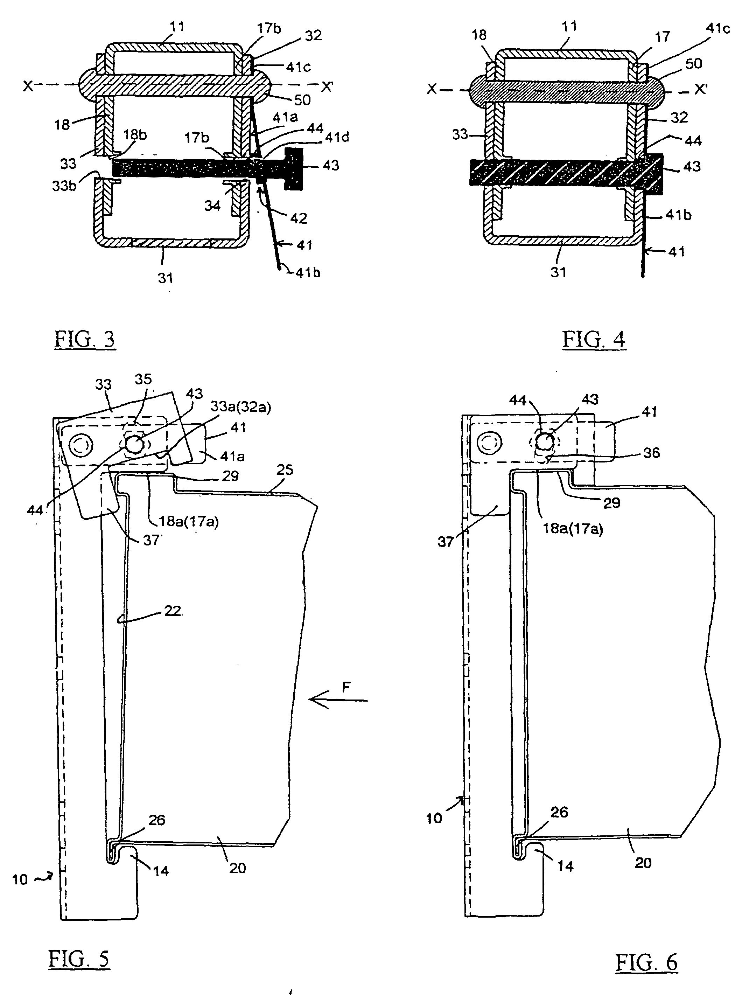

La partie fixe 16 est constituée de deux ailes 17 et 18 qui s'étendent en avancée des flancs 12 et 13, perpendiculairement à l'âme 11, et sont destinées à s'appliquer par leurs tranches inférieures respectives 17a et 18a sur l'épaulement longitudinal 29 (figures 5 et 6). Les ailes 17 et 18 présentent respectivement un orifice taraudé 17b et un trou 18b (figure 3).

La pièce 30 est montée pivotante autour des ailes 17 et 18 de la partie fixe 16 et est destinée à s'accrocher après l'épaulement 29. Elle est retenue en position de maintien sur la canalisation grâce à des moyens de verrouillage élastique 40.

La pièce 30 est en forme de U et comporte une âme 31 et deux ailes en regard 32 et 33 se raccordant perpendiculairement à l'âme. Elle est fixée par les extrémités libres des ailes 32, 33 et montée pivotante autour des ailes supérieures 17, 18 de la partie fixe 16 selon un axe XX' perpendiculaire à celles-ci, grâce à des moyens d'assemblage et de pivotement 50. Les moyens 50 consistent par exemple en un rivet qui traverse par des orifices adaptés les ailes 32, 17, 18 et 33 de la partie fixe 16 et de la pièce pivotante 30.

Les ailes 32 et 33 de la pièce 30 ménagent sur leurs tranches inférieures des décrochements respectifs 32a et 33a qui sont aptes à coopérer avec l'épaulement 29 de l'enveloppe 21 en position de maintien de la pièce pivotante sur la canalisation pour réaliser l'accrochage de la tête 15 sur la canalisation.

La pièce 30 comporte aussi sur une de ses ailes 32 un évidement oblong 34 d'axe médian longitudinal YY' oblique par rapport à l'axe XX'. L'évidement 34 est dissymétrique perpendiculairement à l'axe YY' et présente une partie large supérieure 35 et une partie étroite inférieure 36.

La pièce 30 présente en outre un trou 33b sur son aile 33 en regard du trou 18b de la partie fixe.

Enfin, les ailes 32 et 33 comportent à leur extrémité libre des retours 37 perpendiculaires et s'étendant vers le bas de la pièce. Ces retours sont destinés à s'appuyer contre un bord de l'enveloppe lors de l'accrochage de la pièce de fixation 10 de manière à faire pivoter automatiquement la pièce 30.

La pièce pivotante 30 est verrouillée en position de maintien sur la canalisation par les moyens de verrouillage élastique 40. Ces moyens de verrouillage comprennent un ressort 41, un verrou 42 et une vis de serrage 43.

Le ressort 41 consiste de préférence en un ressort à lame qui présente deux faces opposées plates 41 a, 41 b. Le ressort est fixé par l'une de ses extrémités 41c à l'aile 32 de la pièce pivotante via le rivet 50 et sa face 41a est disposée en regard de l'aile 32 de la pièce pivotante. Le ressort comprend enfin un trou 41d positionné de manière à être en regard avec l'évidement 34 de la pièce pivotante, que celle-ci soit en position verrouillée ou non.

La vis de serrage 43 traverse successivement le trou 41d du ressort, l'évidement 34 de la pièce pivotante et l'orifice taraudé 17b de la partie fixe. En particulier, la vis 43 traverse la partie large 35 de l'évidement 34 en position verrouillée pour limiter la rotation de la pièce pivotante et la partie étroite 36 en position déverrouillée pour bloquer la pièce pivotante.

Le verrou 42 comporte un élément d'encliquetage 44 qui est appliqué sous l'action de poussée du ressort 41 contre la pièce pivotante au niveau de la partie étroite 36 en position déverrouillée de la pièce pivotante et est destiné à coopérer par encliquetage avec la partie large 35 en position de verrouillage.

L'élément d'encliquetage 44 consiste de préférence en un épaulement annulaire prévu périphériquement au trou 41d du ressort et en saillie par rapport à la face 41 a du ressort.

Il est possible pour renforcer la sécurité de la fixation de la pièce 10 sur la canalisation d'embrasser complètement la canalisation par une sangle métallique 60. La sangle est passée dans la pièce de fixation, successivement, à travers deux évidements 11a prévus dans l'âme 11 de la pièce 10, par l'espace libre entre l'âme 11 de la pièce 10 et l'âme 31 de la pièce pivotante et à travers enfin un évidement 31a de l'âme. La sangle peut ainsi entourer la canalisation puis être attachée par un dispositif approprié.

Le montage de la pièce de fixation à la canalisation va à présent être décrit.

C'est en fait les pièces de fixation 10 qui sont tout d'abord fixées à la paroi 70 contre laquelle doit être montée la canalisation 20. Chaque pièce de fixation 10 est fixée par son âme 11 (figure 1).

Avant montage de la canalisation à une pièce de fixation 10, la pièce pivotante 30 est en position déverrouillée. Ainsi, la vis de serrage 43 traverse la lame de ressort 41, l'aile 32 de la pièce pivotante et l'aile 17 de la partie fixe 16 par le trou 41d, la partie étroite 36 de l'évidement 34 et respectivement l'orifice taraudé 17b, et l'épaulement annulaire 44 de la lame de ressort 41 s'applique en partie en butée contre l'aile 32 de la pièce 30 et s'engage en partie dans la partie étroite 36.

Au montage, la canalisation 20 est engagée dans le pied 14 de manière que les crochets 14a s'accrochent derrière le bandeau d'agrafage 26. On bascule la canalisation vers la pièce 10 dans le sens de la flèche F (figure 5), les tranches des retours 37 de la pièce pivotante reposent alors contre le bord supérieur de la paroi latérale 22. Puis on exerce sur la canalisation une force dirigée toujours selon la flèche F, ce qui appuie sur les retours 37 pour faire pivoter automatiquement la pièce 30 vers le bas de façon que les décrochements 32a, 33a viennent s'agripper après l'épaulement 29 de la paroi supérieure 25 de la canalisation.

Le pivotement de la pièce 30 entraîne la rotation de l'évidement 34 par rapport à l'axe de la vis 43 de manière à placer la partie large 35 à l'ancienne position de la partie étroite 36. La vis 43, restant engagée dans l'orifice taraudé 17b et le trou 41d, traverse alors la partie large 35. L'épaulement annulaire 44 vient s'encliqueter dans la partie large 35. La pièce pivotante 30 est ainsi verrouillée. Pour confirmer le verrouillage, la vis 43 est serrée d'avantage de manière à traverser les ailes opposées 33 et 18 de la pièce pivotante et de la partie fixe par les trous 18b et respectivement 33b.

Pour dégager la canalisation 20 de la pièce de fixation 10, on dévisse la vis 43 afin de l'ôter des trous 18b et 33b. On écarte la lame de ressort 41 de l'aile 32 de la pièce pivotante pour désengager l'épaulement annulaire 44 de la partie large 35. Puis on fait pivoter la pièce 30 vers le haut de manière à repositionner l'épaulement 44 en butée contre la partie étroite 36, la pièce 30 étant alors déverrouillée. Il suffit ensuite de tirer la canalisation dans le sens contraire de la flèche F et de l'enlever des crochets 14a.

L'utilisation de la sangle métallique 60 peut être faite partiellement sur l'ensemble de la canalisation pour certaines pièces de fixation seulement afin de laisser libre d'accès des zones suffisamment grandes de la paroi latérale 23. La sangle métallique doit être glissée à travers les évidements 11a de l'âme 11 avant la fixation de la pièce 10 à la paroi 70.

## Revendications

1. Pièce de fixation, notamment de fixation murale, pour canalisation électrique profilée comportant une âme (11), une tête (15) et un pied (14) destinés respectivement à s'appliquer par des formes adaptées contre une paroi latérale (22) et les parois supérieure (25) et inférieure (24) de l'enveloppe de la canalisation (21), **la tête (15) comportant une partie fixe (16) et une pièce (30) montée pivotante sur la partie fixe selon un axe (XX') orienté selon la longueur de la canalisation et destinée à s'accrocher à la paroi supérieure (25) de la canalisation, caractérisé en ce que** :
- la tête (15) comporte des moyens de verrouillage élastique (40) exerçant un effort parallèle à l'axe (XX') pour verrouiller la pièce pivotante (30) sur la partie fixe (16),
- **les moyens de verrouillage (40) comportent un ressort (41) et un verrou (42) qui est sollicité par le ressort et mis en oeuvre automatiquement par le pivotement de la tête (15) quand la pièce de fixation (10) est appliquée contre la canalisation.**

2. Pièce de fixation selon la revendication 1, **caractérisée en ce que** la pièce pivotante (30) comprend dans une paroi latérale (32) un évidement oblong (34) dissymétrique présentant une partie large (35) et une partie étroite (36) telles que le verrou (42) est engagée par le ressort dans la partie large en position de verrouillage mais pas dans la partie étroite en position de déverrouillage.

3. Pièce de fixation selon la revendication 2, **caractérisée en ce que** les moyens de verrouillage (40) comprennent une vis de serrage (43) qui pénètre librement dans l'évidement oblong (34) et dans un orifice taraudé (17b) de la partie fixe (16) pour, respectivement, limiter la rotation de la pièce pivotante (30) en position de déverrouillage et la bloquer en position de verrouillage.

4. Pièce de fixation selon la revendication 2 ou 3, **caractérisée en ce que** le verrou (42) comporte un élément d'encliquetage (44) qui s'appuie contre la pièce pivotante (30) au niveau du bord de la partie étroite (36) de l'évidement oblong (34) en position de déverrouillage et s'engage dans la partie large (35) de l'évidement oblong (34) en position de verrouillage.

5. Pièce de fixation selon la revendication 4, **caractérisée en ce que** le ressort (41) est une lame fixée par l'une de ses extrémités (41c) à la pièce pivotante (30) et présentant un trou de passage (41d) pour la vis (43), et que l'élément d'encliquetage (44) consiste en un épaulement annulaire prévu en saillie autour du trou (41d) de la lame de ressort en regard de la pièce pivotante (30).

6. Pièce de fixation selon la revendication 1, **caractérisée en ce que** le pied (14) de la pièce de fixation comporte au moins un crochet (14a) prévu pour coopérer avec un pli (26) de l'enveloppe de la canalisation, et la tête (15) comporte au moins un décrochement (32a, 33a) prévu pour coopérer avec un épaulement (29) de l'enveloppe de la canalisation, tandis que la pièce pivotante (30) comprend au moins un retour (37) destiné à s'appuyer contre un bord de l'enveloppe au cours du montage pour un pivotement automatique de la pièce (30).

## Patentansprüche

1. Befestigungsteil, insbesondere zur Wandbefestigung, für einen Profil-Schienenverteiler, das einen Steg (11), einen Kopf (15) und einen Fuß (14) aufweist, die je dazu bestimmt sind, sich durch angepasste Formen gegen eine Seitenwand (22) und die obere (25) und untere Wand (24) der Hülle des Schienenverteilers (21) anzulegen, wobei der Kopf (15) ein ortsfestes Teil (16) und ein Teil (30) aufweist, das auf dem ortsfesten Teil gemäß einer in Längsrichtung des Schienenverteilers ausgerichteten Achse (XX') schwenkbar montiert und dazu bestimmt ist, an der oberen Wand (25) des Schienenverteilers befestigt zu werden, **dadurch gekennzeichnet, dass**:
- der Kopf (15) elastische Verriegelungsmittel (40) aufweist, die eine Kraft parallel zur Achse (XX') ausüben, um das schwenkbare Teil (30) auf dem ortsfesten Teil (16) zu verriegeln,
- die Verriegelungsmittel (40) eine Feder (41) und einen Riegel (42) aufweisen, der von der Feder gespannt und durch das Schwenken des Kopfes (15) automatisch betätigt wird, wenn das Befestigungsteil (10) gegen den Schienenverteiler angelegt wird.

2. Befestigungsteil nach Anspruch 1, **dadurch gekennzeichnet, dass** das schwenkbare Teil (30) in einer Seitenwand (32) eine unsymmetrische längliche Aussparung (34) aufweist, die einen breiten Bereich (35) und einen schmalen Bereich (36) besitzt, derart, dass der Riegel (42) von der Feder in der Verriegelungsstellung in den breiten Bereich, aber in der Entriegelungsstellung nicht in den schmalen Bereich eingeführt wird.

3. Befestigungsteil nach Anspruch 2, **dadurch gekennzeichnet, dass** die Verriegelungsmittel (40) eine Klemmschraube (43) aufweisen, die frei in die längliche Aussparung (34) und in ein Gewindeloch (17b) des ortsfesten Teils (16) eindringt, um die Drehung des schwenkbaren Teils (30) in der Entriegelungsstellung zu begrenzen und es in der Verriegelungsstellung zu blockieren.

4. Befestigungsteil nach Anspruch 2 oder 3, **dadurch gekennzeichnet, dass** der Riegel (42) ein Einklinkelement (44) aufweist, das sich in der Entriegelungsstellung in Höhe des Rands des schmalen Bereichs (36) der länglichen Aussparung (34) gegen das schwenkbare Teil (30) anlegt und sich in der Verriegelungsstellung in den breiten Bereich (35) der länglichen Aussparung (34) einfügt.

5. Befestigungsteil nach Anspruch 4, **dadurch gekennzeichnet, dass** die Feder (41) ein Blatt ist, das über eines seiner Enden (41c) am schwenkbaren Teil (30) befestigt ist und ein Durchgangsloch (41d) für die Schraube (43) aufweist, und dass das Einklinkelement (44) aus einer Ringschulter besteht, die um das Loch (41d) des Federblatts herum vorstehend gegenüber dem schwenkbaren Teil (30) vorgesehen ist.

6. Befestigungsteil nach Anspruch 1, **dadurch gekennzeichnet, dass** der Fuß (14) des Befestigungsteils mindestens einen Haken (14a) aufweist, der vorgesehen ist, um mit einem Knick (26) der Hülle des Schienenverteilers zusammenzuwirken, und dass der Kopf (15) mindestens einen Rücksprung (32a, 33a) aufweist, der vorgesehen ist, um mit einer Schulter (29) der Hülle des Schienenverteilers zusammenzuwirken, während das schwenkbare Teil (30) mindestens Umbiegung (37) aufweist, die dazu bestimmt ist, sich während der Montage für ein automatisches Schwenken des Teils (30) gegen einen Rand der Hülle anzulegen.

## Claims

1. Attachment part, particularly for wall attachment, for sectional electric pipe comprising a web (11), a head (15) and a foot (14) intended respectively to be pressed by appropriate forms against a side wall (22) and the top wall (25) and bottom wall (24) of the envelope of the pipe (21), the head (15) comprising a fixed portion (16) and a part (30) mounted pivotingly on the fixed portion along an axis (XX') oriented along the length of the pipe and intended to be coupled to the top wall (25) of the pipe, **characterized in that**:
- the head (15) comprises elastic latching means (40) exerting a force parallel to the axis (XX') to latch the pivoting part (30) onto the fixed part (16),
- the latching means (40) comprise a spring (41) and a latch (42) which is acted upon by the spring and operated automatically by the pivoting of the head (15) when the attachment part (10) is pressed against the pipe.

2. Attachment part according to Claim 1, **characterized in that** the pivoting part (30) comprises in a side wall (32) an oblong dissymmetrical recess (34) having a wide portion (35) and a narrow portion (36) such that the latch (42) is engaged by the spring in the wide portion in a latched position but not in the narrow portion in an unlatched position.

3. Attachment part according to Claim 2, **characterized in that** the latching means (40) comprise a tightening screw (43) which penetrates freely into the oblong recess (34) and into a tapped orifice (17b) of the fixed portion (16) in order, respectively, to limit the rotation of the pivoting portion (30) in an unlatched position and to immobilize it in a latched position.

4. Attachment part according to Claim 2 or 3, **characterized in that** the latch (42) comprises a snap-fit element (44) which presses against the pivoting part (30) at the edge of the narrow portion (36) of the oblong recess (34) in an unlatched position and engages in the wide portion (35) of the oblong recess (34) in a latched position.

5. Attachment part according to Claim 4, **characterized in that** the spring (41) is a leaf attached by one of its ends (41c) to the pivoting part (30) and having a through hole (41d) for the screw (43) and that the snap-fit element (44) consists of an annular shoulder provided as a protrusion about the hole (41d) of the spring leaf facing the pivoting part (30).

6. Attachment part according to Claim 1, **characterized in that** the foot (14) of the attachment part comprises at least one hook (14a) provided to interact with a fold (26) of the pipe envelope, and the head (15) comprises at least one crank (32a, 33a) provided to interact with a shoulder (29) of the pipe envelope, while the pivoting part (30) comprises at least one return (37) intended to press against an edge of the envelope during mounting for an automatic pivoting of the part (30).
